(19) Europäisches Patentamt
European Patent Office
Office européen des brevets

(11) EP 0 512 684 B1

(12) EUROPEAN PATENT SPECIFICATION

(45) Date of publication and mention of the grant of the patent:
**24.01.1996 Bulletin 1996/04**

(51) Int. Cl.[6]: **A01N 43/90**
// (A01N43/90, 43:40)

(21) Application number: **92303023.3**

(22) Date of filing: **06.04.1992**

(54) **Synergistic herbicidal compositions**
Synergistische herbizide Kombinationen
Associations d'herbicides synérgiques

(84) Designated Contracting States:
**DE FR GB**

(30) Priority: **03.05.1991 GB 9109600**

(43) Date of publication of application:
**11.11.1992 Bulletin 1992/46**

(73) Proprietor: **DOWELANCO**
**Indianapolis, Indiana 46268-1189 (US)**

(72) Inventor: **Brown, John Graham**
**Berkshire RG16 7AD (GB)**

(74) Representative: **Raynor, John**
**London WC2A 3SZ (GB)**

(56) References cited:
**EP-A- 0 119 700**
**GB-A- 1 418 979**
**US-A- 4 818 273**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 512 684 B1

## Description

The present invention is directed to the use as a selective herbicide of a synergistic combination of herbicides, and to herbicidal compositions containing the combination.

In a first aspect, the invention provides the use as a selective herbicide of a synergistic combination of N-(2,6-dichloro-3-methylphenyl)-5,7-dimethoxy-1,2,4,-triazolo(1,5a)pyrimidine-2-sulfonamide (hereinafter referred to as "Compound A"), and ((4-amino-3,5-dichloro-6-fluoro-2-pyridinyl)oxy)acetic acid (known commonly as fluroxypyr), or a herbicidally effective salt or ester thereof (hereinafter referred to collectively as "Compound B". Both Compound A and Compound B are known herbicides. Fluroxypyr, its salts and esters, and methods for their preparation are disclosed in GB-A-1418979. N-(2,6-dichloro-3-methylphenyl)-5,7-dimethoxy-1,2,4,-triazolo(1,5a)-pyrimidine-2-sulfonamide (Compound A) is disclosed in U.S. Patent 4,818,273.

We have discovered that a substantial synergistic effect can be achieved by the simultaneous use of Compound A and Compound B. Compound A and Compound B may be applied separately, but are preferably applied as a herbicidal composition comprising the two compounds, and which may preferably also comprise an inert carrier or diluent.

Although the synergistic effect has been demonstrated only in a relatively small number of salts and esters of fluroxypyr, when mixed with Compound A, it is well known that the active constituent of salts and esters of fluroxypyr is the free acid, and that salts and esters very rapidly dissociate and hydrolyse respectively on ingestion into a plant. The nature of the salt or ester may affect the physical transfer of the ester or salt into the plant, but thereafter plays little or no part in determining the herbicidal activity. It has also been demonstrated by the present inventors that the synergistic activity referred to above is manifested by a variety of physical presentations of the two active ingredients. It is accordingly confidently predicted that the synergistic effect which is the subject of this invention will be observed for all herbicidally acceptable salts and esters of fluroxypyr.

The preferred Compounds B are $C_1$-$C_{10}$ esters of fluroxypyr, in particular the methylheptyl ester and the methyl ester. The Compounds A and B are preferably employed in a ratio (A:B, calculated as fluroxypyr acid equivalent) of 1:40 to 8:1. Accordingly, compositions in accordance with the invention preferably contain the two active ingredients at a ratio within this range.

The combination of herbicides in accordance with the invention produces a marked synergistic effect, which is capable of selectively controlling important broadleaf weeds, growing in graminaceous crops, particularly in cereal crops, without damaging the cereal crop when applied thereto in herbicidally effective amounts. The combination may also be employed in other applications in which the control of broadleaf weeds is desired, such as in forestry and grassland areas, supporting, for example, ***Lolium*** and ***Festuca*** species. Representative cereal crops include wheat, barley, maize, rye, and oats. Representative weeds include ***Fumaria officinalis*** (Common Fumitory), ***Galium aparine*** (Cleavers), ***Papaver rhoeas*** (Corn Poppy), ***Bilderdykia convolvulus*** (Black Bindweed), ***Viola arvensis*** (Field Pansy), ***Lamium purpureum*** (Red Dead Nettle), ***Chenopodium album*** (Fathen) ***Veronica persica*** (Common Field Speedwell) ***Matricaria inodora*** (scentless mayweed). The compositions of the present invention may be applied to said plants and/or their habitat (growth media) employing conventional application procedures.

For such uses, the unmodified active ingredient mixtures of the present invention can be employed. However, for ease of application the active materials are preferably applied in the form of a herbicidal composition, which will generally contain the said active materials together with suitable inert materials, known in the art as agricultural adjuvants and/or carriers, in solid or liquid form. Thus, for example, the active ingredient mixture can be dispersed on a finely-divided solid and employed therein as a dust or granule. Also, the active ingredient mixtures, as liquid concentrates or solid compositions comprising a mixture of the active ingredients can be dispersed in water, typically with the aid of a surfactant, and the resulting aqueous dispersion employed as a spray. In other procedures, the active ingredient mixtures can be employed as a constituent of organic liquid compositions, oil-in-water and water-in-oil emulsions or water dispersions or compositions containing both dispersed and emulsified particles, with or without the addition of wetting, dispersing, or emulsifying agents. Suitable adjuvants of the foregoing type are well known to those skilled in the art.

The compositions in accordance with the invention generally contain from about 0.00001 to about 95 percent by weight or more, preferably from 0.02 to 60%, more preferably from 0.025 to 25% by weight of the said compounds A and B in total. In compositions to be employed as concentrates, the active ingredient can be present in a concentration from about 5 to about 98 weight percent.

In the preparation of dust, or wettable powder compositions, the active materials can be compounded with any suitable finely divided solid, such as prophyllite, talc, chalk, gypsum, fuller's earth, silica, bentonite, attapulgite, starch, casein, gluten, or the like. In such operations, the finely divided carrier may be ground or mixed with the active materials or wetted with a solution of the toxicant in a volatile organic solvent.

Also, such compositions when employed as concentrates can be dispersed in water, with or without the aid of dispersing agents to form spray mixtures.

In a preferred embodiment, compositions in accordance with the invention are prepared as water-dispersible granules (W.G.'s). Such compositions may be prepared by formulating the active ingredients as a powder, with wetting and dispersing agents, and subsequently agglomerating them using techniques known to those skilled in the art, so as to prepare granular products. These may be dried by appropriate means, to produce water-dispersible granules, which may be sieved to achieve a desired particle size distribution.

Other inert materials such as binders and disintegrating aids may also be employed.

Compositions of this general kind may also be prepared by spray-drying dispersions of the active materials in water.

In either case, the active materials may either be present in particulate form, without a solid carrier, or else may be used with a solid carrier, for example silica. When a solid carrier is employed, the carrier may be treated with the active material in molten form, and subsequently ground to a suitable fine particle size, in order to prepare the desired granules. Alternatively, the active materials may be dissolved in a suitable solvent, and then added to the solid carrier. In a further alternative method, the active materials may be emulsified into water, in the presence of a colloidal stabilizer, and spray-dried to produce a solid product. The particular method employed will depend upon the precise salt or ester of fluroxypyr which is employed.

Granular formulations may be prepared by impregnating a solution of the toxicant in a volatile organic solvent onto a bed of coarsely divided attapulgite, bentonite, diatomite, or the like.

A further preferred formulation type is a suspension-emulsion (S.E.). An S.E. may be formed by combining an emulsion phase, containing a salt or ester of fluroxypyr dissolved in an appropriate solvent, with an aqueous phase containing Compound A in a solid dispersed form.

The emulsion may be prepared by compounding a suitable water-immiscible inert organic liquid and a surface active dispersing agent to produce an emulsifiable concentrate which can be further diluted with water and/or oil, to form mixtures in the form of oil-in-water emulsions which may optionally contain water miscible organic co-solvents to improve the physical properties of the formulation. Alternatively, the emulsion may be prepared by emulsifying an oil phase into water under high shearstirring, with appropriate adjuvants to produce a stable oil-in-water emulsion. Such an emulsion may then be compounded with a dispersion of compound (A) in water, to form the desired suspension emulsions (S.E.). Techniques for preparing suspension emulsions are well known to those skilled in the art, and are reviewed, for example, in an Article by Mulqueen et al (Pesticides Science, 1990, 29, 451-465).

Surfactants which can be advantageously employed herein can be readily determined by those skilled in the art and include various nonionic and anionic surfactants, or a blend of two or more of said surfactants.

Examples of nonionic surfactants useful in preparing these emulsifiable concentrates include the polyalkylene glycol ethers and condensation products of alkyl and aryl phenols, aliphatic alcohols, aliphatic amines or fatty acids with ethylene oxide, propylene oxide or mixtures of ethylene and propylene oxides such as the ethoxylated alkyl phenols and carboxylic esters solubilized with a polyol or polyoxyalkylene.

Anionic surfactants include the oil-soluble salts (e.g., calcium) of alkylaryl sulphonic acids, oil soluble salts of sulphated polyglycol ethers and appropriate salts of phosphated polyglycol ether. Alternatively, water-soluble anionic surfactants may also be employed, such as the ammonium salt of a sulphated polyglycol ether.

These surface active dispersing agents are usually employed in an amount of from 0.1 to 20.0 percent by weight of the emulsion.

Representative organic liquids which can be employed in preparing emulsifiable concentrates of the present invention are the aromatic liquids such as xylene; propyl benzene fractions; mixed naphthalene fractions; mineral oils; substituted aromatic organic liquids such as dioctyl phthalate; kerosene; butene; dialkyl amides of various fatty acids, particularly the dimethyl amides of fatty glycols and glycol derivatives such as the n-butyl ether, ethyl ether or methyl ether of diethylene glycol, the methyl ether of triethylene glycol and ketones such as cyclohexanone, isophorone and dihydroisophorone. Mixtures of two or more organic liquids are also often suitably employed in the preparation of the emulsifiable concentrate.

The preferred organic liquids are ketones, especially isophorone-xylene mixtures, xylene, and propyl benzene fractions, with xylene and higher boiling aromatic petroleum fractions being most preferred.

It is noted that the rates of application of the individual active compounds may be markedly reduced while the high level of action is maintained unchanged. Additionally, it has been found that the combined mixture still achieves a high degree of weed control even when employed at application rates too low for either of the two active materials individually to show an effect. This increase in weed control results in a broadening of the weed spectrum controlled, as well as a decrease in any phytotoxic effects of the active material towards the crop.

In further embodiments, the active compound mixture of the present invention or compositions containing the same, can be advantageously employed in combination with one or more additional pesticidal compounds to broaden the spectrum of action. Such additional pesticidal compounds may be insecticides, nematocides, miticides, arthropodicides, additional herbicides, fungicides or bactericides that are compatible with the compounds of the present invention in the medium selected for application and not antagonistic to the activity of the present compounds. Accordingly, in such embodiments, the pesticidal compound is usually employed as a supplemental toxicant for the same or for a different pesticidal use or as an additament. The active compound mixture in combination with the additional pesticidal material can generally be present in a ratio of from 1 to 100 parts of the active compound mixture of the present invention with from 100 to 1 part of the additional pesticidal compound(s). It may also be advantageous to add safeners to protect crop plants from inadvertent overdoses of the compositions of the present invention.

The exact herbicidally effective amount of the active material to be applied is dependent not only on the specific ratios of the active ingredients being applied, but also on the particular action desired, the specific weed plant species to be controlled and the stage of growth thereof as well as the part of the plant to be contacted with the active ingredient mixture (note that all ratios at all dosage rates will not give the same control response for all weeds). The active ingredient mixture exhibits outstanding action against broadleaf weeds while having no appreciable effect on the crop plants at herbicidally effective application use rates of for example, from 4 to 50 g/hectare, generally from 5 to 20 g/hectare of Compound A, and from 50 to 240 g/hectare, generally from 75 to 200 g/hectare, of the fluroxypyr ester, calculated as fluroxypyr acid equivalent. Salts of fluroxypyr are in general somewhat less active than its esters, and the amounts required when salts are employed will typically be from 100 to 500 g/hectare, generally from 150 to 400 g/hectare

The following Examples illustrate the present invention and the manner by which it can be practised, but should not be construed as limitating the overall scope of the invention.

In all Examples, the percent kill and control is measured on a scale of

0 percent = no kill and control

100 percent = complete kill and control.

EXAMPLE I

Representative compositions of the present invention were evaluated to determine their effectiveness in synergistic postemergent weed control operations.

Suspension emulsions containing varying concentrations of the methylheptyl ester of ((4-amino-3,5-dichloro-6-fluoro-2-pyridinyl)oxy)-acetic acid (Compound B) and N-(2,6-dichloro-3-methylphenyl)-5,7-dimethoxy-1,2,4,-triazolo(1,5a)pyrimidine-2-sulfonamide (Compound A), were prepared as follows:

A 250 g per litre suspension concentrate of Compound A was prepared by wet-milling the following ingredients, until a particle size distribution with a volume median diameter of about 2µm was obtained.

| | |
|---|---|
| Compound A | 250g |
| Nonionic wetting/dispersing agent | 20g |
| Anionic lignosulphonate dispersing agent | 20g |
| Silicone antifoam | 1g |
| Xanthan gum | 2g |
| Glycol antifreeze | 100g |
| Water | balance to 1 litre. |

Varying amounts of the resulting suspension concentrate were added to water to provide the desired concentration of Compound A. Similarly, varying amounts of a commercially available emulsifiable concentrate containing 200 g/l (as acid equivalent) of fluroxypyr 1 methylheptyl ester (Trade Mark STARANE-2) were added, to provide the desired concentration of Compound B.

In each of the tests which follow, the composition was applied at a rate of 200 litres per hectare. Accordingly, in each case, the amount of water to which the suspension concentrate of Compound A and the emulsifiable concentrate of Compound B was added was sufficient to provide the desired application rates, when the resulting composition was used at this application rate.

Seeds of the weed species ***Bilderdykia convolvulus***, ***Viola arvensis***, ***Lamium purpureum***, ***Chenopodium album*** and ***Fumaria officinalis***, and seeds of the crop plant winter wheat variety Avalon, were planted in beds of good agricultural soil and grown in a greenhouse. After the plants had emerged and had grown to a 2-6 leaf stage, separate beds of the plants were sprayed at a rate of 200 l/hectare with one of the above-prepared compositions at a treatment rate as shown in Tables I to V (in grams of each active compound per hectare. Other beds of the plants were not sprayed, (as controls). After treatment, the beds were maintained for various periods, as shown in Tables I to V, under greenhouse conditions conducive for good plant growth. At the end of this period, the beds were examined to determine the amount of kill and control. It was found that the wheat plants were not affected by the test compounds. The results are shown in Tables I to V.

In the tables which follow, those runs which include only one but not both of Compound A and Compound B are included as controls.

Expected control is calculated as

$$100 - \frac{(\text{\% control by Compound A}) \times (\text{\% control by Compound B})}{100}$$

where % control= 100-actual control

according to the technique described in Colby, "Calculating Synergistic and Antagonistic Responses of Herbicidal Combinations", Weeds, Volume 15 (1967), pages 20-22 and Colby, "Greenhouse Evaluation of Herbicidal Combinations", Proc. NEWCC, No. 19, pages 312-320.

The percent increase over the expected control is calculated as

$$\frac{\textit{Actual control}}{\textit{Expected Control}} \times 100 - 100$$

Table I

| Control of ***Bilderdykia convolvulus*** | | | | | | |
|---|---|---|---|---|---|---|
| Run No. | Cmpd A g/ha | Cmpd B g/ha (acid equiv) | Ratio of A:B | Expected Control (%) | Actual Control (%) 32 days after treatment | % Increase over Expected |
| 1 | 6.25 | - | - | - | 0 | - |
| 2 | 12.50 | - | - | - | 45 | - |
| 3 | 25.00 | - | - | - | 30 | - |
| 4 | 50.00 | - | - | - | 53 | - |
| 5 | - | 6.25 | - | - | 10 | - |
| 6 | - | 12.50 | - | - | 30 | - |
| 7 | - | 25.00 | - | - | 63 | - |
| 8 | - | 50.00 | - | - | 78 | - |
| 9 | 6.25 | 6.25 | 1:1 | 10 | 30 | 200 |
| 10 | 6.25 | 12.50 | 1:2 | 30 | 68 | 126 |
| 11 | 6.25 | 25.00 | 1:4 | 63 | 100 | 59 |
| 12 | 6.25 | 50.00 | 1:8 | 78 | 100 | 28 |
| 13 | 12.50 | 6.25 | 2:1 | 50 | 55 | 10 |
| 14 | 12.50 | 12.50 | 1:1 | 61 | 88 | 44 |
| 15 | 12.50 | 25.00 | 1:2 | 80 | 96 | 20 |
| 16 | 12.50 | 50.00 | 1:4 | 88 | 100 | 14 |
| 17 | 25.00 | 6.25 | 4:1 | 37 | 75 | 102 |
| 18 | 25.00 | 12.50 | 2:1 | 51 | 100 | 96 |
| 19 | 25.00 | 25.00 | 1:1 | 74 | 100 | 35 |
| 20 | 25.00 | 50.00 | 1:2 | - | 100 | 18 |
| 21 | 50.00 | 6.25 | 8:1 | 58 | 83 | 43 |
| 22 | 50.00 | 12.50 | 4:1 | 67 | 90 | 34 |
| 23 | 50.00 | 25.00 | 2:1 | 83 | 85 | 2.4 |
| 24 | 50.00 | 50.00 | 1:1 | 90 | 93 | 3.3 |

Table II

| Control of ***Viola arvensis*** | | | | | | |
|---|---|---|---|---|---|---|
| Run No. | Cmpd A g/ha | Cmpd B g/ha (acid equiv) | Ratio A:B | Expected Control (%) | Actual Control (%) 17 days after treatment | % Increase over Expected |
| 1 | 6.25 | - | - | - | 15 | - |
| 2 | 12.50 | - | - | - | 36 | - |
| 3 | 25.00 | - | - | - | 39 | - |
| 4 | 50.00 | - | - | - | 50 | - |
| 5 | - | 6.25 | - | - | 8 | - |
| 6 | - | 12.50 | - | - | 15 | - |
| 7 | - | 25.00 | - | - | 22 | - |
| 8 | - | 50.00 | - | - | 25 | - |
| 9 | 6.25 | 6.25 | 1:1 | 22 | 50 | 127 |
| 10 | 6.25 | 12.50 | 1:2 | 28 | 64 | 129 |
| 11 | 6.25 | 25.00 | 1:4 | 34 | 58 | 71 |
| 12 | 6.25 | 50.00 | 1:8 | 36 | 75 | 108 |
| 13 | 12.50 | 6.25 | 2:1 | 41 | 48 | 17 |
| 14 | 12.50 | 12.50 | 1:1 | 46 | 48 | 4 |
| 15 | 12.50 | 25.00 | 1:2 | 50 | 68 | 36 |
| 16 | 12.50 | 50.00 | 1:4 | 52 | 78 | 50 |
| 17 | 25.00 | 6.25 | 4:1 | 44 | 53 | 20 |
| 18 | 25.00 | 12.50 | 2:1 | 48 | 48 | 0 |
| 19 | 25.00 | 25.00 | 1:1 | 52 | 65 | 25 |
| 20 | 25.00 | 50.00 | 1:2 | 54 | 73 | 35 |
| 21 | 50.00 | 6.25 | 8:1 | 54 | 58 | 7 |
| 22 | 50.00 | 12.50 | 4:1 | 57 | 68 | 19 |
| 23 | 50.00 | 25.00 | 2:1 | 61 | 80 | 31 |
| 24 | 50.00 | 50.00 | 1:1 | 62 | 80 | 29 |

Table III

| Control of ***Lamium purpureum*** | | | | | | |
|---|---|---|---|---|---|---|
| Run No. | Cmpd A g/ha | Cmpd B g/ha (acid equiv) | Ratio A:B | Expected Control (%) | Actual Control (%) 12 days after treatment | % Increase over Expected |
| 1 | 6.25 | - | - | - | 18 | - |
| 2 | 12.50 | - | - | - | 24 | - |
| 3 | 25.00 | - | - | - | 25 | - |
| 4 | 50.00 | - | - | - | 23 | - |
| 5 | - | 6.25 | - | - | 15 | - |
| 6 | - | 12.50 | - | - | 29 | - |
| 7 | - | 25.00 | - | - | 49 | - |
| 8 | - | 50.00 | - | - | 58 | - |
| 9 | 6.25 | 6.25 | 1:1 | 30 | 43 | 43 |
| 10 | 6.25 | 12.50 | 1:2 | 42 | 50 | 19 |
| 11 | 6.25 | 25.00 | 1:4 | 58 | 69 | 19 |
| 12 | 6.25 | 50.00 | 1:8 | 66 | 74 | 12 |
| 13 | 12.50 | 6.25 | 2:1 | 35 | 60 | 71 |
| 14 | 12.50 | 12.50 | 1:1 | 46 | 70 | 52 |
| 15 | 12.50 | 25.00 | 1:2 | 61 | 79 | 30 |
| 16 | 12.50 | 50.00 | 1:4 | 68 | 84 | 24 |
| 17 | 25.00 | 6.25 | 4:1 | 36 | 69 | 92 |
| 18 | 25.00 | 12.50 | 2:1 | 47 | 81 | 72 |
| 19 | 25.00 | 25.00 | 1:1 | 62 | 85 | 37 |
| 20 | 25.00 | 50.00 | 1:2 | 68 | 83 | 22 |
| 21 | 50.00 | 6.25 | 8:1 | 39 | 73 | 87 |
| 22 | 50.00 | 12.50 | 4:1 | 49 | 76 | 55 |
| 23 | 50.00 | 25.00 | 2:1 | 63 | 84 | 33 |
| 24 | 50.00 | 50.00 | 1:1 | 70 | 81 | 16 |

Table IV

| Control of ***Chenopdium ablum*** | | | | | | |
|---|---|---|---|---|---|---|
| Run No. | Cmpd A g/ha | Cmpd B g/ha (acid equiv) | Ratio A:B | Expected Control (%) | Actual Control 19 days after treatment (%) | % Increase over Expected |
| 1 | 3.125 | - | - | - | 47 | - |
| 2 | 6.25 | - | - | - | 60 | - |
| 3 | 12.50 | - | - | - | 55 | - |
| 4 | 25.00 | - | - | - | 60 | - |
| 5 | - | 31.25 | - | - | 25 | - |
| 6 | - | 62.50 | - | - | 52 | - |
| 7 | - | 125.00 | - | - | 55 | - |
| 8 | 3.125 | 31.25 | 1:10 | 60 | 88 | 47 |
| 9 | 3.125 | 62.50 | 1:20 | 75 | 87 | 16 |
| 10 | 3.125 | 125.00 | 1:40 | 76 | 93 | 22 |
| 11 | 6.25 | 31.25 | 1:5 | 70 | 83 | 19 |
| 12 | 6.25 | 62.50 | 1:10 | 81 | 90 | 11 |
| 13 | 6.25 | 125.00 | 1:20 | 82 | 92 | 12 |
| 14 | 12.50 | 31.25 | 1:2.5 | 66 | 83 | 26 |
| 15 | 12.50 | 62.50 | 1:5 | 78 | 93 | 19 |
| 16 | 12.50 | 125.00 | 1:10 | 80 | 93 | 16 |
| 17 | 25.00 | 31.25 | 1:1.25 | 70 | 85 | 21 |
| 18 | 25.00 | 62.50 | 1:2.5 | 81 | 93 | 15 |
| 19 | 25.00 | 125.00 | 1:5 | 82 | 92 | 12 |

Table V

| Control of ***Fumaria officinalis*** | | | | | | |
|---|---|---|---|---|---|---|
| Run No. | Cmpd A g/ha | Cmpd B g/ha (acid equiv) | Ratio A:B | Expected Control in % | Actual Control 19 days after treatment (%) | % Increase over Expected |
| 1 | 3.125 | - | - | - | 5 | - |
| 2 | 6.25 | - | - | - | 18 | - |
| 3 | 12.50 | - | - | - | 0 | - |
| 4 | 25.00 | - | - | - | 18 | - |
| 5 | - | 31.25 | - | - | 0 | - |
| 6 | - | 62.50 | - | - | 10 | - |
| 7 | - | 125.00 | - | - | 15 | - |
| 8 | 3.125 | 31.25 | 1:10 | 5 | 40 | 700 |
| 9 | 3.125 | 62.50 | 1:20 | 14 | 67 | 379 |
| 10 | 3.125 | 125.00 | 1:40 | 19 | 83 | 337 |
| 11 | 6.25 | 31.25 | 1:5 | 18 | 82 | 356 |
| 12 | 6.25 | 62.50 | 1:10 | 26 | 77 | 196 |
| 13 | 6.25 | 125.00 | 1:20 | 30 | 93 | 210 |
| 14 | 12.50 | 31.25 | 1:2.5 | 0 | 88 | >100(6) |
| 15 | 12.50 | 62.50 | 1:5 | 10 | 88 | 780 |
| 16 | 12.50 | 125 | 1:10 | 15 | 93 | 520 |
| 17 | 25.00 | 31.25 | 1:1.25 | 18 | 75 | 317 |
| 18 | 25.00 | 62.50 | 1:2.5 | 26 | 82 | 215 |
| 19 | 25.00 | 125.00 | 1:5 | 30 | 95 | 217 |

## EXAMPLE II

A number of compositions in accordance with the present invention were prepared as in Example I and evaluated in field trials to determine their effectiveness in the postemergent control of the weed ***Fumaria officinalis*** growing in the presence of spring barley of the variety Triumph.

Seeds of the plants spring barley of the variety Triumph and the weed specie ***Fumaria officinalis*** were planted in plots 6 meters x 3 meters composed of calcareous clay loam soil. Two months after planting, the plants were sprayed at a rate of 200 litre/hectare with one of the compositions having an active material control such as to give treatment rates shown in Table VI. After treatment, the plots were maintained for four weeks under conditions conducive for good plant growth. At the end of this period, the plots were examined to determine the amount of kill and control. It was found that the barley plants were not affected by the test compounds.

The results are set forth in Table VI.

Table VI

| Control of ***Fumaria officinalis*** | | | | | | |
|---|---|---|---|---|---|---|
| Run No. | Cmpd A g/ha | Cmpd B g/ha (acid equiv) | Ratio A:B | Expected Control % | Actual Control 28 days after treatment (%) | % Increase over Expected |
| 1 | - | 100 | - | - | 20 | - |
| 2 | - | 200 | - | - | 40 | - |
| 3 | 10.0 | - | - | - | 0.0 | - |
| 4 | 20.0 | - | - | - | 15.0 | - |
| 5 | 10 | 100 | 10:1 | 20.0 | 60.0 | 200 |
| 6 | 20 | 100 | 5:1 | 36.0 | 80.0 | 122 |
| 7 | 10 | 200 | 20:1 | 20.0 | 90.0 | 350 |
| 8 | 20 | 200 | 10:1 | 52.0 | 97.0 | 87 |

EXAMPLE III

In order to demonstrate that the synergistic effect is not dependent upon physical formulation type, a suspension concentrate containing Compound A and Compound B as utilised in Examples I and II was prepared as follows:

An emulsion was prepared by the method disclosed in the Article by Mulqueen referred to above, utilizing the following ingredients:

| | |
|---|---|
| Fluroxypyr 1-methylheptyl ester | 21.6g |
| Xylene range petroleum solvent | 21.6g |
| Styrene-butadiene latex | 30.0g |
| Sodium lauryl sulphate solution | 5.0g |
| Nonionic fatty alcohol ethoxylate | 5.0g |
| Water | 6.8g. |

The emulsion prepared had a particle size distribution (volume median diameter) of about 0.5µm.

The resulting emulsion (90g) was combined with 4g of an aqueous suspension concentrate of Compound A containing 250g/l of Compound A, prepared as in Example I. Water was added to the resulting mixture, to produce a diluable suspension emulsion, containing 15g/l of Compound A, and 150g/l of Compound B.

The suspension emulsion could be diluted with water to provide the desired concentration of Compound A and B.

Various dilutions were prepared, as shown in Table VII, and tested on the species ***Viola arevnsis***, ***Veronica persica*** and ***Chenopodium album***.

In each case, the final solution was applied at a rate of 200 l/hectare, and the dilutions were such as to provide the treatment rates indicated.

The results shown in Table VII demonstrate that the degree of control achieved for the diluable composition are generally in agreement with those obtained in Examples 1 and 2.

The data from Tables I-VII illustrate that better herbicidal control was obtained employing the two active materials together than would be expected from the results obtained from employing each of the two active materials alone.

Table VII

| Control of various weeds using suspension emulsion formulation of Example III | | | | | | |
|---|---|---|---|---|---|---|
| Run No. | Cmpd A g/ha | Cmpd B g/ha (acid equiv) | Ratio A:B | Actual Control (%) After 21 days | | |
| | | | | ***Viola arvensis*** | ***Veronica persica*** | ***Chenopodium album*** |
| 1 | 1.88 | 18.8 | 1:10 | 35 | 90 | 19 |
| 2 | 3.75 | 37.5 | 1:10 | 85 | 100 | 54 |
| 3 | 7.5 | 75 | 1:10 | 86 | 100 | 70 |
| 4 | 15 | 150 | 1:10 | 92 | 100 | 80 |

Example IV

An emulsifiable concentrate of fluroxypyr methyl ester (as compound B) was prepared having the following composition.

| | g/l |
|---|---|
| Fluroxypyr methyl ester | 105 |
| anionic/nonionic mixed emulsifiers (Trade Marks Tensiofix CS and Tensiofix B7453) | 100 |
| N-methyl pyrrolidone | 100 |
| $C_9$ aromatic solvent (Trade Mark Solvesso 150) | 1,366 |

Varying amounts of this emulsifiable concentrate containing 100 g/l Fluroxypyr methyl ester (as acid equivalent) were added to a suspension concentrate of compound A prepared as in Example I, to provide the desired concentration of Compound B.

The resulting formulation was tested against the following weeds, at the growth stage indicated, by the method described above.

| | |
|---|---|
| ***Lamium purpureum*** | 4 leaf |
| ***Veronica persica*** | 4 leaf |
| ***Galium aparine*** | 2 whorls of leaves |
| ***Matricaria inodora*** | 5 leaf |
| ***Viola arvense*** | 4 leaf |

In each case, the composition was applied ata rate of 200 litres per hectare.

Results

The percent of control was assessed by visual percent control (tables VIII to XII) and also by measurement of fresh weight (tables XIII to XVII).

Table VIII

| Control of *Veronica persica* | | | | | | |
|---|---|---|---|---|---|---|
| Run No. | Cmpd A g/ha | Cmpd B g/ha (acid equiv) | Ratio of A:B | Expected Control (%) | Actual Control (%) 19 days after treatment | % Increase over Expected |
| 1 | 3.125 | - | - | - | 10 | - |
| 2 | 6.25 | - | - | - | 20 | - |
| 3 | 12.5 | - | - | - | 28 | - |
| 4 | 25.0 | - | - | - | 30 | - |
| 5 | - | 15.6 | - | - | 0 | - |
| 6 | - | 31.25 | - | - | 0 | - |
| 7 | - | 62.5 | - | - | 33 | - |
| 8 | - | 125 | - | - | 75 | - |
| 9 | 3.125 | 15.6 | 1:5 | 10 | 73 | 630 |
| 10 | 3.125 | 31.25 | 1:10 | 10 | 77 | 770 |
| 11 | 3.125 | 62.5 | 1:20 | 40 | 78 | 95 |
| 12 | 3.125 | 125 | 1:40 | 77 | 80 | 4 |
| 13 | 6.25 | 15.6 | 1:25 | 20 | 75 | 275 |
| 14 | 6.25 | 31.25 | 1:5 | 20 | 77 | 285 |
| 15 | 6.25 | 62.5 | 1:10 | 46 | 78 | 70 |
| 16 | 6.25 | 125 | 1:20 | 80 | 90 | 13 |
| 17 | 12.5 | 15.6 | 1:1.25 | 28 | 77 | 175 |
| 18 | 12.5 | 31.25 | 1:2.5 | 28 | 85 | 204 |
| 19 | 12.5 | 62.5 | 1:5 | 52 | 87 | 67 |
| 20 | 12.5 | 125 | 1:10 | 82 | 88 | 7 |
| 21 | 25 | 15.6 | 1:0.6 | 30 | 83 | 177 |
| 22 | 25 | 31.25 | 1:1.25 | 30 | 80 | 167 |
| 23 | 25 | 62.5 | 1:2.5 | 53 | 82 | 55 |
| 24 | 25 | 125 | 1:5 | 82 | 82 | 0 |

Table XI

| Control of *Matricaria inodora* | | | | | | |
|---|---|---|---|---|---|---|
| Run No. | Cmpd A g/ha | Cmpd B g/ha (acid equiv) | Ratio of A:B | Expected Control (%) | Actual Control (%) 19 days after treatment | % Increase over Expected |
| 1 | 3.125 | - | - | - | 0 | - |
| 2 | 6.25 | - | - | - | 20 | - |
| 3 | 12.5 | - | - | - | 58 | - |
| 4 | 25.0 | - | - | - | 37 | - |
| 5 | - | 15.6 | - | - | 0 | - |
| 6 | - | 31.25 | - | - | 0 | - |
| 7 | - | 62.5 | - | - | 0 | - |
| 8 | - | 125 | - | - | 3 | - |
| 9 | 3.125 | 15.6 | 1:5 | 0 | 73 | >100 |
| 10 | 3.125 | 31.25 | 1:10 | 0 | 67 | >100 |
| 11 | 3.125 | 62.5 | 1:20 | 0 | 85 | >100 |
| 12 | 3.125 | 125 | 1:40 | 3 | 90 | 2900 |
| 13 | 6.25 | 15.6 | 1:2.5 | 20 | 78 | 290 |
| 14 | 6.25 | 31.25 | 1:5 | 20 | 85 | 325 |
| 15 | 6.25 | 62.5 | 1:10 | 20 | 85 | 325 |
| 16 | 6.25 | 125 | 1:20 | 22 | 90 | 309 |
| 17 | 12.5 | 15.6 | 1:1.25 | 58 | 82 | 41 |
| 18 | 12.5 | 31.25 | 1:2.5 | 58 | 83 | 43 |
| 19 | 12.5 | 62.5 | 1:5 | 58 | 87 | 50 |
| 20 | 12.5 | 125 | 1:10 | 59 | 83 | 41 |
| 21 | 25 | 15.6 | 1:0.6 | 37 | 85 | 130 |
| 22 | 25 | 31.25 | 1:1.25 | 37 | 83 | 124 |
| 23 | 25 | 62.5 | 1:2.5 | 37 | 82 | 122 |
| 24 | 25 | 125 | 1:5 | 39 | 90 | 131 |

Table X

| Control of ***Galium aparine*** | | | | | | |
|---|---|---|---|---|---|---|
| Run No. | Cmpd A g/ha | Cmpd B g/ha (acid equiv) | Ratio of A:B | Expected Control (%) | Actual Control (%) 19 days after treatment | % Increase over Expected |
| 1 | 3.125 | - | - | - | 0 | - |
| 2 | 6.25 | - | - | - | 0 | - |
| 3 | 12.5 | - | - | - | 0 | - |
| 4 | 25.0 | - | - | - | 0 | - |
| 5 | - | 15.6 | - | - | 0 | - |
| 6 | - | 31.25 | - | - | 0 | - |
| 7 | - | 62.5 | - | - | 35 | - |
| 8 | - | 125 | - | - | 63 | - |
| 9 | 3.125 | 15.6 | 1:5 | 0 | 27 | >100 |
| 10 | 3.125 | 31.25 | 1:10 | 0 | 63 | >100 |
| 11 | 3.125 | 62.5 | 1:20 | 35 | 72 | 106 |
| 12 | 3.125 | 125 | 1:40 | 63 | 90 | 43 |
| 13 | 6.25 | 15.6 | 1:2.5 | 0 | 45 | >100 |
| 14 | 6.25 | 31.25 | 1:5 | 0 | 67 | >100 |
| 15 | 6.25 | 62.5 | 1:10 | 35 | 82 | 134 |
| 16 | 6.25 | 125 | 1:20 | 63 | 93 | 48 |
| 17 | 12.5 | 15.6 | 1:1.25 | 0 | 57 | >100 |
| 18 | 12.5 | 31.25 | 1:2.5 | 0 | 80 | >100 |
| 19 | 12.5 | 62.5 | 1:5 | 35 | 85 | 143 |
| 20 | 12.5 | 125 | 1:10 | 63 | 91 | 46 |
| 21 | 25 | 15.6 | 1:0.6 | 0 | 77 | >100 |
| 22 | 25 | 31.25 | 1:1.25 | 0 | 83 | >100 |
| 23 | 25 | 62.5 | 1:2.5 | 35 | 85 | 143 |
| 24 | 25 | 125 | 1:5 | 63 | 90 | 43 |

Table XI

| Control of ***Viola arvensis*** | | | | | | |
|---|---|---|---|---|---|---|
| Run No. | Cmpd A g/ha | Cmpd B g/ha (acid equiv) | Ratio of A:B | Expected Control (%) | Actual Control (%) 19 days after treatment | % Increase over Expected |
| 1 | 3.125 | - | - | - | 22 | - |
| 2 | 6.25 | - | - | - | 12 | - |
| 3 | 12.5 | - | - | - | 55 | - |
| 4 | 25.0 | - | - | - | 72 | - |
| 5 | - | 15.6 | - | - | 0 | - |
| 6 | - | 31.25 | - | - | 10 | - |
| 7 | - | 62.5 | - | - | 37 | - |
| 8 | - | 125 | - | - | 53 | - |
| 9 | 3.125 | 15.6 | 1:5 | 22 | 75 | 241 |
| 10 | 3.125 | 31.25 | 1:10 | 30 | 80 | 167 |
| 11 | 3.125 | 62.5 | 1:20 | 51 | 70 | 37 |
| 12 | 3.125 | 125 | 1:40 | 63 | 82 | 30 |
| 13 | 6.25 | 15.6 | 1:2.5 | 12 | 63 | 425 |
| 14 | 6.25 | 31.25 | 1:5 | 21 | 78 | 271 |
| 15 | 6.25 | 62.5 | 1:10 | 45 | 82 | 82 |
| 16 | 6.25 | 125 | 1:20 | 59 | 83 | 41 |
| 17 | 12.5 | 15.6 | 1:1.25 | 55 | 75 | 36 |
| 18 | 12.5 | 31.25 | 1:2.5 | 59 | 75 | 27 |
| 19 | 12.5 | 62.5 | 1:5 | 72 | 77 | 7 |
| 20 | 12.5 | 125 | 1:10 | 79 | 75 | 0 |
| 21 | 25 | 15.6 | 1:0.6 | 72 | 73 | 1 |
| 22 | 25 | 31.25 | 1:1.25 | 75 | 77 | 3 |
| 23 | 25 | 62.5 | 1:2.5 | 82 | 85 | 4 |
| 24 | 25 | 125 | 1:5 | 87 | 80 | 9 |

Table XII

| Control of ***Lamium purpureum*** | | | | | | |
|---|---|---|---|---|---|---|
| Run No. | Cmpd A g/ha | Cmpd B g/ha (acid equiv) | Ratio of A:B | Expected Control (%) | Actual Control (%) 19 days after treatment | % Increase over Expected |
| 1 | 3.125 | - | - | - | 0 | - |
| 2 | 6.25 | - | - | - | 0 | - |
| 3 | 12.5 | - | - | - | 0 | - |
| 4 | 25.0 | - | - | - | 0 | - |
| 5 | - | 15.6 | - | - | 0 | - |
| 6 | - | 31.25 | - | - | 0 | - |
| 7 | - | 62.5 | - | - | 52 | - |
| 8 | - | 125 | - | - | 81 | - |
| 9 | 3.125 | 15.6 | 1:5 | 0 | 12 | >100 |
| 10 | 3.125 | 31.25 | 1:10 | 0 | 23 | >100 |
| 11 | 3.125 | 62.5 | 1:20 | 52 | 52 | 0 |
| 12 | 3.125 | 125 | 1:40 | 81 | 72 | 11 |
| 13 | 6.25 | 15.6 | 1:2.5 | 0 | 20 | >100 |
| 14 | 6.25 | 31.25 | 1:5 | 0 | 18 | >100 |
| 15 | 6.25 | 62.5 | 1:10 | 52 | 75 | 44 |
| 16 | 6.25 | 125 | 1:20 | 81 | 77 | 0 |
| 17 | 12.5 | 15.6 | 1:1.25 | 0 | 17 | >100 |
| 18 | 12.5 | 31.25 | 1:2.5 | 0 | 25 | >100 |
| 19 | 12.5 | 62.5 | 1:5 | 52 | 32 | 39 |
| 20 | 12.5 | 125 | 1:10 | 81 | 77 | 0 |
| 21 | 25 | 15.6 | 1:0.6 | 0 | 15 | >100 |
| 22 | 25 | 31.25 | 1:1.25 | 0 | 33 | >100 |
| 23 | 25 | 62.5 | 1:2.5 | 52 | 43 | 0 |
| 24 | 25 | 125 | 1:5 | 81 | 65 | 0 |

Table XIII

| Control of ***Lamium purpureum*** (by reduction in fresh weight) | | | | | | |
|---|---|---|---|---|---|---|
| Run No. | Cmpd A g/ha | Cmpd B g/ha (acid equiv) | Ratio of A:B | Expected Reduction (%) | Actual Reduction (%) 19 days after treatment | % Increase over Expected |
| 1 | 3.125 | - | - | - | 4 | - |
| 2 | 6.25 | - | - | - | 0 | - |
| 3 | 12.5 | - | - | - | 19 | - |
| 4 | 25.0 | - | - | - | 11 | - |
| 5 | - | 15.6 | - | - | 0 | - |
| 6 | - | 31.25 | - | - | 0 | - |
| 7 | - | 62.5 | - | - | 71 | - |
| 8 | - | 125 | - | - | 70 | - |
| 9 | 3.125 | 15.6 | 1:5 | 4 | 30 | 650 |
| 10 | 3.125 | 31.25 | 1:10 | 4 | 34 | 750 |
| 11 | 3.125 | 62.5 | 1:20 | 72 | 58 | 0 |
| 12 | 3.125 | 125 | 1:40 | 71 | 87 | 25 |
| 13 | 6.25 | 15.6 | 1:2.5 | 0 | 39 | >100 |
| 14 | 6.25 | 31.25 | 1:5 | 0 | 36 | >100 |
| 15 | 6.25 | 62.5 | 1:10 | 71 | 70 | 0 |
| 16 | 6.25 | 125 | 1:20 | 70 | 80 | 14 |
| 17 | 12.5 | 15.6 | 1:1.25 | 19 | 39 | 105 |
| 18 | 12.5 | 31.25 | 1:2.5 | 19 | 49 | 157 |
| 19 | 12.5 | 62.5 | 1:5 | 76 | 67 | 0 |
| 20 | 12.5 | 125 | 1:10 | 76 | 75 | 0 |
| 21 | 25 | 15.6 | 1:0.6 | 11 | 42 | 282 |
| 22 | 25 | 31.25 | 1:1.25 | 11 | 57 | 418 |
| 23 | 25 | 62.5 | 1:2.5 | 74 | 49 | 0 |
| 24 | 25 | 125 | 1:5 | 73 | 72 | 0 |

Table XIV

| Control of ***Veronica persica*** (by reduction in fresh weight) | | | | | | |
|---|---|---|---|---|---|---|
| Run No. | Cmpd A g/ha | Cmpd B g/ha (acid equiv) | Ratio of A:B | Expected Reduction (%) | Actual Reduction (%) 19 days after treatment | % Increase over Expected |
| 1 | 3.125 | - | - | - | 40 | - |
| 2 | 6.25 | - | - | - | 51 | - |
| 3 | 12.5 | - | - | - | 56 | - |
| 4 | 12.0 | - | - | - | 55 | - |
| 5 | - | 15.6 | - | - | 9 | - |
| 6 | - | 31.25 | - | - | 24 | - |
| 7 | - | 62.5 | - | - | 59 | - |
| 8 | - | 125 | - | - | 87 | - |
| 9 | 3.125 | 15.6 | 1:5 | 45 | 89 | 120 |
| 10 | 3.125 | 31.25 | 1:10 | 54 | 89 | 65 |
| 11 | 3.125 | 62.5 | 1:20 | 75 | 91 | 21 |
| 12 | 3.125 | 125 | 1:40 | 22 | 92 | 318 |
| 13 | 6.25 | 15.6 | 1:2.5 | 55 | 89 | 62 |
| 14 | 6.25 | 31.25 | 1:5 | 63 | 90 | 43 |
| 15 | 6.25 | 62.5 | 1:10 | 80 | 92 | 15 |
| 16 | 6.25 | 125 | 1:20 | 94 | 96 | 2 |
| 17 | 12.5 | 15.6 | 1:1.25 | 60 | 94 | 57 |
| 18 | 12.5 | 31.25 | 1:2.5 | 67 | 96 | 43 |
| 19 | 12.5 | 62.5 | 1:5 | 82 | 96 | 17 |
| 20 | 12.5 | 125 | 1:10 | 94 | 96 | 2 |
| 21 | 25 | 15.6 | 1:0:6 | 59 | 95 | 61 |
| 22 | 25 | 31.25 | 1:1.25 | 66 | 94 | 42 |
| 23 | 25 | 62.5 | 1:2.5 | 81 | 95 | 42 |
| 24 | 25 | 125 | 1:5 | 94 | 94 | 0 |

Table XV

| Control of ***Galium aparine*** (by reduction in fresh weight) | | | | | | |
|---|---|---|---|---|---|---|
| Run No. | Cmpd A g/ha | Cmpd B g/ha (acid equiv) | Ratio of A:B | Expected Reduction (%) | Actual Reduction (%) 19 days after treatment | % Increase over Expected |
| 1 | 3.125 | - | - | - | 0 | - |
| 2 | 6.25 | - | - | - | 0 | - |
| 3 | 12.5 | - | - | - | 28 | - |
| 4 | 25.0 | - | - | - | 2 | - |
| 5 | - | 15.6 | - | - | 6 | - |
| 6 | - | 31.25 | - | - | 19 | - |
| 7 | - | 62.5 | - | - | 58 | - |
| 8 | - | 125 | - | - | 83 | - |
| 9 | 3.125 | 15.6 | 1:5 | 6 | 48 | 700 |
| 10 | 3.125 | 31.25 | 1:10 | 19 | 86 | 353 |
| 11 | 3.125 | 62.5 | 1:20 | 58 | 91 | 57 |
| 12 | 3.125 | 125 | 1:40 | 83 | 95 | 15 |
| 13 | 6.25 | 15.6 | 1:2.5 | 6 | 71 | 1083 |
| 14 | 6.25 | 31.25 | 1:5 | 19 | 91 | 379 |
| 15 | 6.25 | 62.5 | 1:10 | 58 | 95 | 64 |
| 16 | 6.25 | 125 | 1:20 | 83 | 95 | 15 |
| 17 | 12.5 | 15.6 | 1:1.25 | 32 | 85 | 166 |
| 18 | 12.5 | 31.25 | 1:2.5 | 42 | 95 | 126 |
| 19 | 12.5 | 62.5 | 1:5 | 70 | 96 | 37 |
| 20 | 12.5 | 125 | 1:10 | 88 | 95 | 8 |
| 21 | 25 | 15.6 | 1:0.6 | 8 | 94 | 1075 |
| 22 | 25 | 31.25 | 1:1.25 | 21 | 95 | 352 |
| 23 | 25 | 62.5 | 1:2.5 | 59 | 95 | 61 |
| 24 | 25 | 125 | 1:5 | 83 | 95 | 15 |

Table XVI

| *Viola arvensis* (by reduction in fresh weight) | | | | | | |
|---|---|---|---|---|---|---|
| Run No. | Cmpd A g/ha | Cmpd B g/ha (acid equiv) | Ratio of A:B | Expected Reduction (%) | Actual Reduction (%) 19 days after treatment | % Increase over Expected |
| 1 | 3.125 | - | - | - | 37 | - |
| 2 | 6.25 | - | - | - | 45 | - |
| 3 | 12.5 | - | - | - | 66 | - |
| 4 | 25.0 | - | - | - | 88 | - |
| 5 | - | 15.6 | - | - | 1 | - |
| 6 | - | 31.25 | - | - | 38 | - |
| 7 | - | 62.5 | - | - | 58 | - |
| 8 | - | 125 | - | - | 67 | - |
| 9 | 3.125 | 15.6 | 1:5 | 38 | 91 | 140 |
| 10 | 3.125 | 31.25 | 1:10 | 61 | 90 | 48 |
| 11 | 3.125 | 62.5 | 1:20 | 73 | 86 | 18 |
| 12 | 3.125 | 125 | 1:40 | 79 | 90 | 14 |
| 13 | 6.25 | 15.6 | 1:2.5 | 45 | 86 | 91 |
| 14 | 6.25 | 31.25 | 1:5 | 66 | 90 | 36 |
| 15 | 6.25 | 62.5 | 1:10 | 77 | 93 | 21 |
| 16 | 6.25 | 125 | 1:20 | 82 | 93 | 13 |
| 17 | 12.5 | 15.6 | 1:1.25 | 66 | 91 | 38 |
| 18 | 12.5 | 31.25 | 1:1.5 | 79 | 92 | 17 |
| 19 | 12.5 | 62.5 | 1:5 | 86 | 93 | 8 |
| 20 | 12.5 | 125 | 1:10 | 89 | 93 | 5 |
| 21 | 25 | 15.6 | 1:0.6 | 88 | 91 | 3 |
| 22 | 25 | 31.25 | 1:1.25 | 93 | 91 | 0 |
| 23 | 25 | 62.5 | 1:2.5 | 95 | 94 | 0 |
| 24 | 25 | 125 | 1:5 | 96 | 92 | 0 |

Table XVII

| *Matricaria inodora* (by reduction in fresh weight) | | | | | | |
|---|---|---|---|---|---|---|
| Run No. | Cmpd A g/ha | Cmpd B g/ha (acid equiv) | Ratio of A:B | Expected Reduction (%) | Actual Reduction (%) 19 days after treatment | % Increase over Expected |
| 1 | 3.125 | - | - | - | 13 | - |
| 2 | 6.25 | - | - | - | 39 | - |
| 3 | 12.5 | - | - | - | 44 | - |
| 4 | 25.0 | - | - | - | 55 | - |
| 5 | - | 15.6 | - | - | 6 | - |
| 6 | - | 31.25 | - | - | 4 | - |
| 7 | - | 62.5 | - | - | 24 | - |
| 8 | - | 125 | - | - | 35 | - |
| 9 | 3.125 | 15.6 | 1:5 | 18 | 95 | 428 |
| 10 | 3.125 | 31.25 | 1.10 | 16 | 94 | 488 |
| 11 | 3.125 | 62.5 | 1:20 | 34 | 98 | 188 |
| 12 | 3.125 | 125 | 1:40 | 43 | 98 | 128 |
| 13 | 6.25 | 15.6 | 1:2.5 | 43 | 95 | 121 |
| 14 | 6.25 | 31.25 | 1:5 | 41 | 98 | 139 |
| 15 | 6.25 | 6.25 | 1:10 | 54 | 98 | 82 |
| 16 | 6.25 | 125 | 1:20 | 60 | 99 | 65 |
| 17 | 12.5 | 15.6 | 1:1.25 | 47 | 98 | 109 |
| 18 | 12.5 | 31.25 | 1:2.5 | 46 | 99 | 115 |
| 19 | 12.5 | 62.5 | 1:5 | 57 | 98 | 72 |
| 20 | 12.5 | 125 | 1:10 | 64 | 98 | 53 |
| 21 | 25 | 15.6 | 1:0.6 | 58 | 98 | 69 |
| 22 | 25 | 31.25 | 1:1.25 | 57 | 98 | 72 |
| 23 | 25 | 62.5 | 1:2.5 | 66 | 98 | 49 |
| 24 | 25 | 125 | 1:5 | 71 | 99 | 39 |

<u>EXAMPLE V</u>

A 20% w/w suspension concentrate of fluroxypyr acid in water was prepared by wet milling the ingredients shown in Table XVIII until a particle size distribution with a volume median diameter of about 2µm was obtained.

Varying amounts of the resulting suspension concentrate were added to water to provide the desired concentration of fluroxypyr acid. Similarly, varying amounts of compound A, formulated as the suspension concentrate of Example 1 were added, to provide the desired concentration of compound A.

EXAMPLES VI & VII

Formulations containing dimethylamine salt and potassium salt of fluroxypyr

Fluroxypyr acid was slurried in water, and a molar equivalent of dimethyamine or potassium hydroxide was added, as shown in Table XVIII, in order to provide solutions of the dimethylamine and potassium salt of fluroxypyr respectively.

Varying amounts of the resulting solutions were further diluted with water to provide the desired concentration of the fluroxypyr salt. Similarly, varying amounts of the suspension concentrate of compound A prepared as in Example 1 were added, to provide the desired concentration of compound A.

The formulations resulting from Examples V, VI and VII were evaluated to determine their effectiveness in the post-emergent control of the weeds ***Viola arvensis***, ***Galium aparine***, and ***Matricaria inodora***. The results are shown in Tables XIX to XXII

Table XVIII

| (% W/W) | Example V | Example VI | Example VII |
|---|---|---|---|
| Fluroxypyr | 20 | 20 | 10 |
| Free Acid Phosphate Ester Surfactant (T.M. Soprophor 3D33) | 2.0 | 2.0 | - |
| Dimethylamine | - | 4.6 | - |
| Potassium Hydroxide | - | - | 3.0 |
| Xanthan Gum | 0.3 | - | - |
| Water | 77.7 | 73.4 | 86.6 |

Table XIX

| -Control of ***Viola arvensis*** (by reduction in fresh weight) | | | | | | |
|---|---|---|---|---|---|---|
| Run No. | Cmpd A g/ha | Cmpd B g/ha (acid equiv) | Ratio A:B | Expected Control (%) | Actual Control (%) 23 days after treatment | % Increase over Expected |
| 1 | 6.25 | - | - | - | 20 | - |
| 2 | 12.50 | - | - | - | 50 | - |
| 3 | 25.00 | - | - | - | 52 | - |
| 4 | 50.00 | - | - | - | 60 | - |
| 5 | - | 125 | - | - | 12 | - |
| 6 | - | 250 | - | - | 15 | - |
| 7 | - | 500 | - | - | 15 | - |
| 8 | 6.25 | 125 | 1:20 | 30 | 68 | 127 |
| 9 | 6.25 | 250 | 1:40 | 32 | 62 | 94 |
| 10 | 6.25 | 500 | 1:80 | 32 | 72 | 125 |
| 11 | 12.50 | 125 | 1:10 | 56 | 65 | 16 |
| 12 | 12.50 | 250 | 1:20 | 57 | 68 | 19 |
| 13 | 12.50 | 500 | 1:40 | 57 | 67 | 18 |
| 14 | 25.00 | 125 | 1:5 | 58 | 72 | 24 |
| 15 | 25.00 | 250 | 1:10 | 59 | 75 | 27 |
| 16 | 25.00 | 500 | 1:20 | 59 | 77 | 31 |
| 17 | 50.00 | 125 | 1:2.5 | 65 | 77 | 19 |
| 18 | 50.00 | 250 | 1:5 | 66 | 77 | 17 |
| 19 | 50.00 | 500 | 1:10 | 66 | 77 | 17 |
| Compound B is fluroxypyr acid | | | | | | |

Table XX

| -Control of ***Viola arvensis*** (by reduction in fresh weight) | | | | | | |
|---|---|---|---|---|---|---|
| Run No. | Cmpd A g/ha | Cmpd B g/ha (acid equiv) | Ratio A:B | Expected Control (%) | Actual Control (%) 23 days after treatment | % Increase over Expected |
| 1 | 6.25 | - | - | - | 20 | - |
| 2 | 12.50 | - | - | - | 50 | - |
| 3 | 25.00 | - | - | - | 52 | - |
| 4 | 50.00 | - | - | - | 60 | - |
| 5 | - | 250 | - | - | 13 | - |
| 6 | - | 500 | - | - | 15 | - |
| 7 | 6.25 | 250 | 1:40 | 30 | 55 | 83 |
| 8 | 6.25 | 500 | 1:80 | 32 | 53 | 66 |
| 9 | 12.50 | 250 | 1:20 | 56 | 65 | 16 |
| 10 | 12.50 | 500 | 1:40 | 57 | 60 | 5 |
| 11 | 25.00 | 250 | 1:10 | 58 | 70 | 21 |
| 12 | 25.00 | 500 | 1:20 | 59 | 72 | 22 |
| 13 | 50.00 | 250 | 1:5 | 65 | 75 | 31 |
| 14 | 50.00 | 500 | 1:10 | 66 | 85 | 29 |
| Compound B is the dimethylamine salt of fluroxypyr | | | | | | |

Table XXI

| Control of ***Galium aparine*** (by reduction in fresh weight) | | | | | | |
|---|---|---|---|---|---|---|
| Run No. | Cmpd A g/ha | Cmpd B g/ha (acid equiv) | Ratio A:B | Expected Control (%) | Actual Control (%) 17 days after treatment | % Increase over Expected |
| 1 | 6.25 | - | - | - | 14 | - |
| 2 | 12.50 | - | - | - | 29 | - |
| 3 | 25.00 | - | - | - | 78 | - |
| 4 | - | 31.25 | - | - | 0 | - |
| 5 | - | 62.50 | - | - | 26 | - |
| 6 | - | 125 | - | - | 46 | - |
| 7 | - | 250 | - | - | 70 | - |
| 8 | - | 500 | - | - | 84 | - |
| 9 | 6.25 | 31.25 | 1:5 | 14 | 84 | 500 |
| 10 | 6.25 | 62.50 | 1:10 | 37 | 61 | 65 |
| 11 | 6.25 | 125 | 1:20 | 54 | 91 | 69 |
| 12 | 6.25 | 250 | 1:40 | 74 | 95 | 28 |
| 13 | 6.25 | 500 | 1:80 | 86 | 95 | 11 |
| 14 | 12.50 | 31.25 | 1:2.5 | 29 | 72 | 148 |
| 15 | 12.50 | 62.50 | 1:5 | 47 | 67 | 43 |
| 16 | 12.50 | 125 | 1:10 | 62 | 75 | 21 |
| 17 | 12.50 | 250 | 1:20 | 79 | 95 | 20 |
| 18 | 12.50 | 500 | 1:40 | 89 | 96 | 8 |
| 19 | 25.00 | 31.25 | 1:1.25 | 78 | 94 | 8 |
| 20 | 25.00 | 62.50 | 1:2.5 | 84 | 95 | 13 |
| 21 | 25.00 | 125 | 1:5 | 88 | 97 | 10 |
| 22 | 25.00 | 250 | 1:10 | 93 | 96 | 3 |
| 23 | 25.00 | 500 | 1:20 | 96 | 98 | 2 |
| Compound B is the Potassium salt of fluroxypyr | | | | | | |

Table XXII

| Control of ***Matricaria inodora*** (by reduction in fresh weight) | | | | | | |
|---|---|---|---|---|---|---|
| Run No. | Cmpd A g/ha | Cmpd B g/ha (acid equiv) | Ratio A:B | Expected Control (%) | Actual Control (%) 17 days after treatment | % Increase over Expected |
| 1 | 6.25 | - | - | - | 7 | - |
| 2 | 12.50 | - | - | - | 32 | - |
| 3 | 25.00 | - | - | - | 75 | - |
| 4 | 50.00 | - | - | - | 72 | - |
| 5 | - | 31.25 | - | - | 17 | - |
| 6 | - | 62.50 | - | - | 10 | - |
| 7 | - | 125 | - | - | 13 | - |
| 8 | - | 250 | - | - | 38 | - |
| 9 | - | 500 | - | - | 64 | - |
| 10 | 6.25 | 31.25 | 1:5 | 23 | 50 | 117 |
| 11 | 6.25 | 62.50 | 1:10 | 16 | 71 | 344 |
| 12 | 6.25 | 125 | 1:20 | 19 | 55 | 190 |
| 13 | 6.25 | 250 | 1:40 | 42 | 76 | 81 |
| 14 | 6.25 | 500 | 1:80 | 66 | 74 | 12 |
| 15 | 12.50 | 31.25 | 1:2.5 | 44 | 66 | 50 |
| 16 | 12.50 | 62.50 | 1:5 | 39 | 68 | 74 |
| 17 | 12.50 | 125 | 1:10 | 41 | 75 | 83 |
| 18 | 12.50 | 250 | 1:20 | 58 | 91 | 57 |
| 19 | 12.50 | 500 | 1:40 | 75 | 81 | 8 |
| Compound B is the Potassium salt of fluroxypyr | | | | | | |

## Claims

1. A herbicidal composition which comprises a synergistic mixture of

   (A) N-(2,6-dichloro-3-methylphenyl)-5,7-dimethoxy-1,2,4,-triazolo(1,5a)pyrimidine-2-sulfonamide, and

   (B) ((4-amino-3,5-dichloro-6-fluoro-2-pyridinyl)oxy)-acetic acid or a herbicidally acceptable salt or ester thereof.

2. A composition as claimed in Claim 1, wherein Compound B is the methyl or methylheptyl ester.

3. A composition as claimed in any one of the preceding Claims, wherein Compound A and Compound B are present in a ratio of from 1:40 to 8:1.

4. A composition as claimed in any one of the preceding Claims, wherein Compound A and Compound B together constitute from 0.00001 to 95 weight percent of the composition.

5. A composition as claimed in any one of the preceding Claims, which also comprises an inert carrier or diluent.

6. A composition as claimed in Claim 5, in the form of water-dispersable granules, or a suspension emulsion.

7. A method for the selective kill and control of broadleaf weeds which method comprises applying to said weeds or to a locus in which the growth of weeds is to be controlled synergistic amounts of (A), N-(2,6-dichloro-3-methylphenyl)-5,7-dimethoxy-1,2,4,-triazolo(1,5a)pyrimidine-2-sulfonamide, and (B), ((4-amino-3,5-dichloro-6-fluoro-2-pyridinyl)oxy)acetic acid or a herbicidally acceptable salt or ester thereof.

8. A method as claimed in Claim 7, wherein the Compounds A and B are applied in the form of a composition as claimed in any one of Claims 1 to 6.

9. A method as claimed in Claim 7 or Claim 8, wherein Compound A is applied in an amount of from 4 to 50 gram per hectare, and Compound B is applied in an amount of from 50 to 240 gram per hectare.

10. The use as a selective herbicide of a synergistic combination of

(A), N-(2,6-dichloro-3-methylphenyl)-5,7-dimethoxy-1,2,4,-triazolo(1,5a)pyrimidine-2-sulfonamide, and
(B), ((4-amino-3,5-dichloro-6-fluoro-2-pyridinyl)oxy)-acetic acid or a herbicidally acceptable salt or ester thereof.

**Patentansprüche**

1. Herbizidzusammensetzung, welche eine synergistische Mischung umfaßt von:

(A) N-(2,6-Dichlor-3-methylphenyl)-5,7-dimethoxy-1,2,4-triazolo-(1,5a)-pyrimidin-2-sulfonamid, und
(B) ((4-Amino-3,5-dichlor-6-fluor-2-pyridinyl)-oxy)-essigsäure oder einem herbizid annehmbaren Salz oder Ester hiervon.

2. Zusammensetzung nach Anspruch 1, worin die Verbindung B der Methyl- oder Methylheptylester ist.

3. Zusammensetzung nach einem der vorhergehenden Ansprüche, worin die Verbindung A und Verbindung B in einem Verhältnis von 1 : 40 bis 8 : 1 vorhanden sind.

4. Zusammensetzung nach einem der vorhergehenden Ansprüche, worin die Verbindung A und Verbindung B zusammen von 0,00001 bis 95 Gew.-% der Zusammensetzung ausmachen.

5. Zusammensetzung nach einem der vorhergehenden Ansprüche, welche weiter einen inerten Träger oder ein inertes Verdünnungsmittel umfaßt.

6. Zusammensetzung nach Anspruch 5 in Form von in Wasser dispergierbaren Granulen oder einer Suspensionsemulsion.

7. Verfahren zum selektiven Abtöten und Steuern von breitblättrigen Unkräutern, wobei das Verfahren das Aufbringen synergistischer Mengen von

(A) N-(2,6-Dichlor-3-methylphenyl)-5,7-dimethoxy-1,2,4-triazolo-(1,5a)-pyrimidin-2-sulfonamid, und
(B) ((4-Amino-3,5-dichlor-6-fluor-2-pyridinyl)-oxy)-essigsäure oder einem herbizid annehmbaren Salz oder Ester hiervon

auf diese Unkräuter oder auf einen Ort, an welchem das Wachstum von Unkräutern gesteuert werden soll, umfaßt.

8. Verfahren nach Anspruch 7, worin die Verbindungen A und B in Form einer Zusammensetzung, wie in einem der Ansprüche 1 bis 6 beansprucht, aufgebracht werden.

9. Verfahren nach Anspruch 7 oder Anspruch 8, worin die Verbind- und A in einer Menge von 4 bis 50 g pro Hektar aufgebracht wird, und die Verbindung B in einer Menge von 50 bis 240 g pro Hektar aufgebracht wird.

10. Verwendung als selektives Herbizid einer synergistischen Kombination von

(A) N-(2,6-Dichlor-3-methylphenyl)-5,7-dimethoxy-1,2,4-triazolo-(1,5a)-pyrimidin-2-sulfonamid, und
(B) ((4-Amino-3,5-dichlor-6-fluor-2-pyridinyl)-oxy)-essigsäure oder einem herbizid annehmbaren Salz oder Ester hiervon.

## Revendications

1. Composition herbicide qui comprend un mélange synergique de :

   (A) N-(2,6-dichloro-3-méthylphényl)-5,7-diméthoxy-1,2,4-triazolo (1,5a)pyrimidine-2-sulfonamide, et de
   (B) l'acide ((4-amino-3,5-dichloro-6-fluoro-2-pyridinyl)oxy)acétique ou un sel ou ester, acceptable comme herbicide, dudit acide.

2. Composition selon la revendication 1, dans laquelle le composé B est l'ester méthylique ou méthylheptylique.

3. Composition selon l'une quelconque des revendications précédentes, dans laquelle le composé A et le composé B sont présents suivant un rapport de 1:40 à 8:1.

4. Composition selon l'une quelconque des revendications précédentes, dans laquelle le composé A et le composé B pris ensemble constituent de 0,00001 à 95% en poids de la composition.

5. Composition selon l'une quelconque des revendications précédentes, qui renferme également un support ou diluant inerte.

6. Composition selon la revendication 5, qui est sous la forme de granules dispersables dans l'eau ou d'une suspension-émulsion.

7. Procédé pour tuer sélectivement des mauvaises herbes à feuilles larges et maîtriser leur croissance, qui comprend l'application auxdites mauvaises herbes ou à un lieu où la croissance des mauvaises herbes doit être maîtrisée, de quantités synergiques de (A) N-(2,6-dichloro-3-méthylphényl)-5,7-diméthoxy-1,2,4-triazolo(1,5a)pyrimidine-2-sulfonamide et de (B) l'acide ((4-amino-3,5-dichloro-6-fluoro-2-pyridinyl)oxy)acétique ou un sel ou ester, acceptable comme herbicide, de cet acide.

8. Procédé selon la revendication 7, dans lequel les composés A et B sont appliqués sous la forme d'une composition telle que définie dans l'une quelconque des revendications 1 à 6.

9. Procédé selon la revendication 7 ou 8, dans lequel le composé A est appliqué à raison de 4 à 50 g/ha, et le composé B est appliqué à raison de 50 à 240 g/ha.

10. Utilisation comme herbicide sélectif d'une combinaison synergique de :

    (A) N-(2,6-dichloro-3-méthylphényl)-5,7-diméthoxy-1,2,4-triazolo (1,5a)pyrimidine-2-sulfonamide, et de
    (B) l'acide ((4-amino-3,5-dichloro-6-fluoro-2-pyridinyl)oxy)acétique ou un sel ou ester, acceptable comme herbicide, de cet acide.